# EUROPÄISCHE PATENTSCHRIFT

(11) **EP 1 121 027 B1**
(45) Veröffentlichungstag und Bekanntmachung des Hinweises auf die Patenterteilung: **24.04.2002**
(21) Anmeldenummer: 99950624.9
(22) Anmeldetag: 05.10.1999
(51) Int. Cl.: A24C 5/32, A24C 5/18

(54) **ANORDNUNG ZUM ÜBERFÜHREN VON OVALEN ZIGARETTEN AUS EINER AXIALEN IN EINE QUERAXIALE FÖRDERBAHN**
ARRANGEMENT FOR TRANSFERRING OVAL CIGARETTES FROM AN AXIAL PATH OF TRANSPORTATION TO A TRANSVERSALLY AXIAL PATH OF TRANSPORTATION
SYSTEME PERMETTANT DE TRANSFERER DES CIGARETTES OVALES D'UNE VOIE DE TRANSPORT AXIALE A UNE VOIE DE TRANSPORT A AXE TRANSVERSAL

(30) Priorität: 13.10.1998 DE 19847152
(43) Veröffentlichungstag der Anmeldung: 08.08.2001
(73) Patentinhaber: Decouflé s.a.r.l., 91380 Chilly-Mazarin (FR)
(72) Erfinder: DAHLGRÜN, Rolf, F-92370 Chaville (FR); SCHMIDT, Rolf, F-91310 Linas (FR)
(74) Vertreter: Herrmann, Günther
(86) Internationale Anmeldenummer: EP9907404
(87) Internationale Veröffentlichungsnummer: WO0021393

(56) Entgegenhaltungen:
- CH-A- 298 865
- DE-B- 1 049 283
- US-A- 2 917 156
- US-A- 4 051 947

## Beschreibung

Die Erfindung betrifft eine Anordnung zum Überführen von ovalen Zigaretten einfacher oder mehrfacher Gebrauchslänge aus einer axialen Förderbahn in eine queraxiale Förderbahn, mit einer Führung zum Zufördern der mit ihren kleinen Querachsen nach oben ausgerichteten Zigaretten in Richtung ihrer Längsachsen, mit einer Überführungsvorrichtung zum Übernehmen der Zigaretten von der Führung von oben und zu ihrem Überführen in die Bewegungsrichtung quer zu ihren Längsachsen, und mit einer Abnahmevorrichtung zum Abnehmen der Zigaretten von der Überführungsvorrichtung und zum Weiterfördern in der Bewegungsrichtung quer zu ihren Längsachsen.
Unter dem Ausdruck "axiale Förderbahn" wird eine Förderung verstanden, bei der die Zigaretten in Richtung ihrer Längsachsen bewegt werden; entsprechend wird unter dem Ausdruck "queraxiale Förderbahn" eine Förderung verstanden, bei der die Zigaretten in einer Richtung quer zu den Längsachsen, z. B. in Richtung einer ihrer Querachsen bewegt werden, die auf den Längsachsen senkrecht stehen.
Bei der Herstellung von Zigaretten einfacher oder mehrfacher Gebrauchslänge, also z. B. von Einfach- oder Doppelzigaretten, werden die Zigaretten bei dem Strangherstellungsverfahren fortlaufend von einem sogenannten Zigarettenstrang abgetrennt, der aus einem mit Zigarettenpapier umhüllten Tabakstrang besteht und der ebenfalls fortlaufend gebildet wird. Die Zigaretten werden nach dem Abtrennen zumeist in einer Führung, die im allgemeinen als Rinne ausgebildet ist, von der Abtrennstelle wegbewegt und von einer Überführungsvorrichtung erfaßt, die die Bewegung in Richtung der Längsachsen in eine Bewegung quer dazu, also in Richtung einer ihrer Querachsen überführt. Danach werden die Zigaretten von einer Abnahmevorrichtung queraxial zur Weiterverarbeitung, z. B. zum Ansetzen von Filterstopfen, abgefördert. Eine z. B. durch die US-PS 4 051 947 bekannte Überführungsvorrichtung nimmt die Zigaretten mittels Saugluft an umlaufenden Aufnahmen von oben aus der Führung, die z. B. aus einer Rinne entsprechend der GB-PS 1 253 617 besteht, und fördert sie auf einer kontinuierlichen Bahn unter Beibehaltung ihrer Ausrichtung im Raum nach oben, bis die Zigaretten keine axiale Förderkomponente mehr aufweisen. In dieser Förderposition (Abnahmeposition) werden die Zigaretten von Aufnahmen einer umlaufenden Abnahmevorrichtung, im allgemeinen einer mit Mulden versehenen Abnahmetrommel, abgenommen und mit einer queraxialen Förderbewegung abgefördert, z. B. zu einer bekannten Filteransetzmaschine.

Bei der Herstellung von ovalen Zigaretten liegen diese in der Führung (Rinne) derart, daß die kurzen Querachsen nach oben ausgerichtet sind. Werden die Zigaretten dann von der Überführungsvorrichtung übernommen, so sind sie in der gleichen Weise ausgerichtet, was auch wegen der Beibehaltung der Ausrichtung im Raum während der Förderung in die Abnahmeposition der Fall ist. Dort würden die Zigaretten mit ihren langen Querachsen senkrecht zu den Aufnahmen der Abnahmevorrichtung stehen, was unerwünscht ist, weil die Fördersicherheit größer ist, wenn die Zigaretten mit ihren kurzen Querachsen im wesentlichen senkrecht zu den Aufnahmen und der Umlaufachse der Abnahmevorrichtung positioniert sind, die Zigaretten also mit ihren langen Umfangslinien in den Mulden liegen.

Die der Erfindung zugrundeliegende Aufgabe besteht darin, die Förderung von ovalen Zigaretten bei der Überführung von einer längsaxialen Förderbahn in eine queraxiale Förderbahn so auszubilden, daß die Zigaretten auf der umlaufenden Abnahmevorrichtung, z. B. in deren Aufnahmen (Mulden), derartig positioniert werden, daß ihre kurzen Querachsen nach außen weisen. Gemäß der Erfindung wird dies dadurch erreicht, daß die Führung derart wendelförmig verdreht ist, daß die Zigaretten mit ihren großen Querachsen nach oben ausgerichtet werden, und daß die Zigaretten in ihrer Förderausrichtung mit nach oben ausgerichteten großen Querachsen von der Überführungsvorrichtung übernehmbar sind.

Gemäß einer besonders einfachen und daher vorteilhaften Ausgestaltung der Erfindung läßt sich dies dadurch erreichen, daß die Führung kontinuierlich wendelförmig verdreht ist. Die Führung kann in Weiterbildung der Erfindung als Rinne ausgebildet sein, die vorteilhaft die Zigaretten bei der Übernahme durch die Überführungsvorrichtung in ihren oberen Bereichen, also im Bereich der nach oben ausgerichteten großen Querachsen, freigibt.

Gemäß einer weiteren vorteilhaften Ausgestaltung der Erfindung ist die Übernahmevorrichtung mit Aufnahmen zum Übernehmen der Zigaretten von der Führung von oben versehen; die Aufnahmen fördern dann die Zigaretten kontinuierlich auf einer vorzugsweise als Teil einer Ellipse ausgebildeten Bahn zu der Abnahmevorrichtung, wobei die großen Querachsen der Zigaretten nach oben ausgerichtet bleiben. Die Abnahmevorrichtung kann umlaufende Aufnahmen für die von der Überführungsvorrichtung abgegebenen Zigaretten aufweisen, in denen die Zigaretten mit ihren kleinen Querachsen senkrecht zur Umlaufachse ausgerichtet sind. Ist die Führung gemäß der Erfindung in beiden Richtungen verdrehbar, so kann die Lage der Klebnaht der Zigaretten bei der Weiterförderung je nach Richtung der Drehung beeinflußt werden, was vorteilhaft sein kann bei der Weiterverarbeitung der Zigaretten, beispielsweise beim Ankleben von Filtern.

Der Vorteil gemäß der Erfindung besteht darin, daß die Zigaretten in den Aufnahmen der queraxial fördernden Abnahmevorrichtung auch dann "richtig", d. h. mit ihren kurzen Querachsen nach außen liegen, wenn sie aus ihrer axialen Förderbahn von oben entfernt und auf einem Bogen in die Abnahmeposition bewegt werden. Die Zigaretten liegen dann stabil mit dem größten Teil ihrer Umfangshälfte in den Aufnahmen.

Die Erfindung wird anhand eines Ausführungsbeispiels näher erläutert.

Es zeigen:
- Figur 1: den Endbereich einer Zigarettenstrangmaschine zum Herstellen ovaler Zigaretten mit einer nachgeordneten Überführungsvorrichtung in einer Seitenansicht (ohne Zigaretten),
- Figuren 1a ... 1d: Lagen der in vergrößertem Maßstab dargestellten ovalen Zigaretten auf ihrer Förderbahn (Führung) zu der Überführungvorrichtung sowie auf der Überführungsvorrichtung,
- Figur 2: eine perspektivische Darstellung der Überführungsvorrichtung in vergrößertem Maßstab sowie einer dieser nachgeordneten Abnahmevorrichtung.

In den Figuren der Zeichnung werden ovale Zigaretten 1 von einer nicht dargestellten Zigarettenstrangmaschine auf einer Führung in Form einer Führungsrinne 2 abgegeben, in der die Zigaretten in Richtung ihrer Längsachsen 3 entsprechend Pfeil 5 gefördert werden. Führungsrinnen der vorstehend erwähnten Art sind an sich bekannt und beispielsweise der GB-PS 1 253 617 zu entnehmen. Es kann sich dabei um ovale Zigaretten einfacher Gebrauchslänge oder um Zigaretten mehrfacher z. B. doppelter Gebrauchslänge handeln, die aus ihrer Förderrichtung in Richtung ihrer Längsachsen 3 (längsaxiale Förderrichtung) in eine Förderrichtung quer, vorteilhaft senkrecht zu ihren Längsachsen (queraxiale Förderrichtung), überführt werden sollen. Während der queraxialen Förderung werden die Zigaretten weiterverarbeitet, z. B. werden sie mit einem Filterstopfen verbunden oder verpackt. Zur Überführung aus der längsaxialen Förderrichtung in die queraxiale Förderrichtung dient eine an sich z. B. durch die US-PS 4 051 947 bekannte Überführungsvorrichtung 4. Diese weist Aufnahmen 6 für die Zigaretten 1 auf, die mittels Saugluft an den Aufnahmen 6 gehalten werden. Die Aufnahmen 6 befinden sich an einem entsprechend Pfeil 10 umlaufenden Träger 7 und sind durch Trägerarme 8 so bewegbar, daß sie bei Umläufen des Trägers 7 ihre Ausrichtung beibehalten, in dem Beispiel also ihre horizontale Ausrichtung. Eine Aufnahme 6 senkt sich bei dem Umlauf des Trägers 7 nach unten, wobei sie in der untersten Stellung A praktisch die Axialgeschwindigkeit der Zigaretten 1 hat, während die Bewegung in queraxialer Richtung, also die queraxiale Komponente zu Null geworden ist. In dieser Stellung erfaßt die Aufnahme 6 eine Zigarette 1 und hebt sie beim Weiterdrehen des Trägers 7 nach oben von der Führungsrinne 2 ab. Während des Weiterlaufs des Trägers 7 legt die Aufnahme 6 mit der aufgenommenen Zigarette einen Weg auf einer Ellipsenbahn über zumindest annähernd ein Viertel Ellipsenumfang zurück. Ist die Aufnahme 6 bei Punkt B angekommen, so ist die Axialkomponente zu Null geworden und die Aufnahme 6 weist nur noch eine Queraxialkomponente auf. In dem Punkt B wird die Zigarette an die Abnahmevorrichtung 11 übergeben, die als Muldentrommel 12 ausgebildet ist, deren Welle 13 in Richtung des Pfeils 15 um die Achse 14 dreht.

Die Saugluft in der Aufnahme 6 ist in Punkt B abgeschaltet, Saugluft in einer Mulde 16 der Trommel 12 angelegt, so daß die Zigarette aus der Aufnahme 6 in die Mulde 16 abgenommen und in queraxialer Richtung abgefördert werden kann. Die Muldentrommel 12 kann die Eingangstrommel einer Filteransetzmaschine sein, auf der ein Filterstopfen an die Zigarette angeklebt wird. Auf die geschilderte Weise werden Einzel- oder Doppelzigaretten 1 aufeinanderfolgend nach Anforderung in axialer Richtung von den Aufnahmen 6 übernommen, in eine queraxiale Förderung überführt und dann an Mulden 16 übergeben, worauf sie in queraxialer Richtung abgefördert werden.

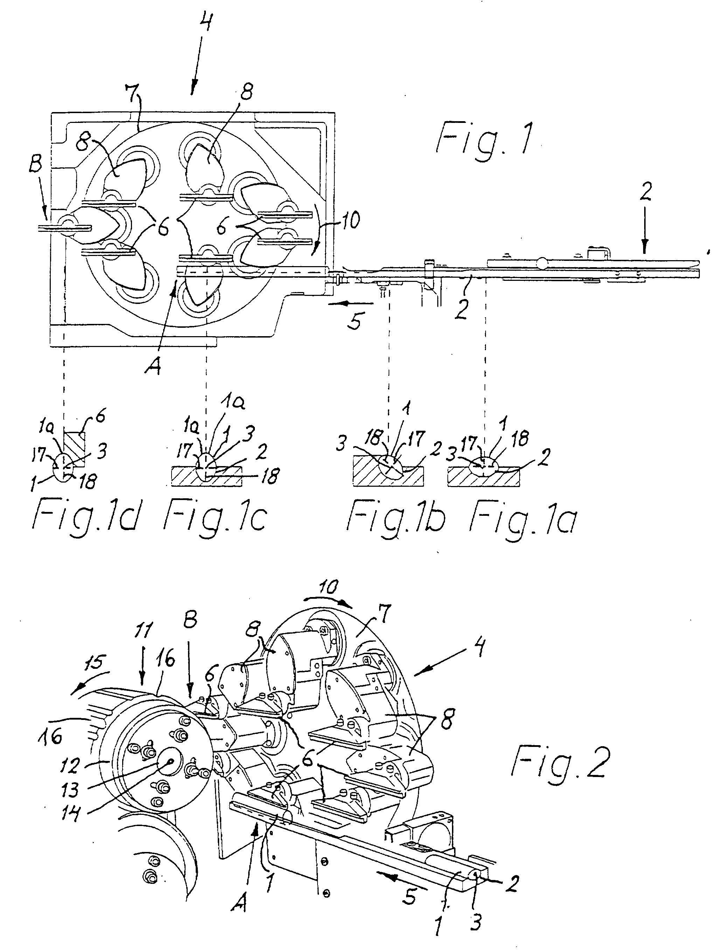

Nach der Herstellung der ovalen Zigaretten liegen diese entsprechend Figur 1a mit ihrer langen Umfangslinie so in der Führungsrinne 2, daß ihre kleinen Querachsen 17 nach oben ausgerichtet sind. Würden die Zigaretten in dieser Weise weitergefördert, so würden sie in den Aufnahmen 6 ebenfalls mit ihren kleinen Querachsen 17 nach außen zu liegen kommen. Sie würden dann aber in den Mulden 16 der Muldentrommel 12 und weiteren nachgeordneten Trommeln mit ihren großen Querachsen 18 nach außen zu liegen kommen, was wegen der Labilität dieser Lage ungünstig wäre.

Gemäß der Erfindung kann dies dadurch in sehr einfacher Weise vermieden werden, daß die Führung (Führungsrinne 2), auf der die Zigaretten 1 längsaxial gefördert werden, derart wendelförmig verdreht oder verwunden ist, daß die Zigaretten mit ihren großen Querachsen 18 nach oben ausgerichtet werden. Den Übergang zeigt die Figur 1b, die endgültige Ausrichtung Fig. 1c. In dieser Ausrichtung werden die Zigaretten 1, deren obere Bereiche 1a dann freigegeben worden sind, von den entsprechend geformten Aufnahmen 6 der Überführungsvorrichtung 4 an Punkt A übernommen und abgefördert. Während der Förderung von A nach B bleibt die Ausrichtung erhalten, so daß die Zigaretten in die Mulden 16 der Muldentrommel 12 so übergeben werden, daß die kurzen Querachsen 17 nach außen gerichtet sind, die Zigaretten also wieder stabil auf ihren langen Umfangslinien in den Mulden 16 liegen wie ursprünglich in der Führungsrinne 2.
Durch das Verdrehen der Führungsrinne nach vorn oder hinten (in Förderrichtung der Zigaretten gesehen links oder rechts) kann die Lage der Zigarettenpapiernähte relativ zur Mulde 16 in erwünschter Weise beeinflußt werden.

## Patentansprüche

1. Anordnung zum Überführen von ovalen Zigaretten einfacher oder mehrfacher Gebrauchslänge aus einer axialen Förderbahn in eine queraxiale Förderbahn, mit einer Führung zum Zufördern der mit ihren kleinen Querachsen nach oben ausgerichteten Zigaretten in Richtung ihrer Längsachsen, mit einer Überführungsvorrichtung zum Übernehmen der Zigaretten von der Führung von oben und zu ihrem Überführen in die Bewegungsrichtung quer zu ihren Längsachsen, und mit einer Abnahmevorrichtung zum Abnehmen der Zigaretten von der Überführungsvorrichtung und zum Weiterfördern in der Bewegungsrichtung quer zu ihren Längsachsen, **dadurch gekennzeichnet, daß** die Führung (2) derart wendelförmig verdreht ist, daß die Zigaretten (1) mit ihren großen Querachsen (18) nach oben ausgerichtet werden, und daß die Zigaretten in ihrer Förderausrichtung mit nach oben ausgerichteten großen Querachsen von der Überführungsvorrichtung (4) übernehmbar sind.

2. Anordnung nach Anspruch 1, **dadurch gekennzeichnet, daß** die Führung (2) kontinuierlich wendelförmig verdreht ist.

3. Anordnung nach Anspruch 1 und/oder 2, **dadurch gekennzeichnet, daß** die Führung als Führungsrinne (2) ausgebildet ist.

4. Anordnung nach einem oder mehreren der vorgehenden Ansprüche, **dadurch gekennzeichnet, daß** die Führung (2) die Zigaretten (1) bei der Übernahme durch die Überführungsvorrichtung (4) in ihren oberen Bereichen (1a) freigibt.

5. Anordnung nach einem oder mehreren der vorhergehenden Ansprüche, **dadurch gekennzeichnet, daß** die Überführungsvorrichtung (4) mit Aufnahmen (6) zum Übernehmen der Zigaretten von der Führung (2) von oben versehen ist, und daß die Aufnahmen die Zigaretten kontinuierlich auf einer vorzugsweise als Teil einer Ellipse ausgebildeten Bahn zu der Abnahmevorrichtung (4) fördern, wobei die großen Querachsen (18) der Zigaretten nach oben ausgerichtet bleiben.

6. Anordnung nach Anspruch 5, **dadurch gekennzeichnet, daß** die Abnahmevorrichtung (11) umlaufende Aufnahmen (16) für die von der Überführungsvorrichtung (4) gegebenen Zigaretten (1) aufweist, in denen die Zigaretten mit ihren kleinen Querachsen (17) senkrecht zur Umlaufachse (14) ausgerichtet sind.

7. Anordnung nach einem oder mehreren der vorhergehenden Ansprüche, **dadurch gekennzeichnet, daß** die Führung (2) in beiden Richtungen verdrehbar ist.

## Claims

1. An arrangement for transferring oval cigarettes of single or double consumption length from an axial conveyor path to a transverse-axial conveyor path, having a guide for supplying the cigarettes in the direction of their longitudinal axes, said cigarettes being aligned with their small transverse axes pointing upwards, having a transfer device for receiving the cigarettes from the guide from above and for transferring them into the transverse movement direction with respect to their longitudinal axes, and having a removal device for removing the cigarettes from the transfer device and for conveying them further in the transverse movement direction with respect to their longitudinal axes, **characterised in that** the guide (2) is twisted in a helical shape, such that the cigarettes (1) are aligned with their large transverse axes (18) pointing upwards, and such that the cigarettes may be received by the transfer device (4) in their conveying alignment with their large transverse axes oriented upwards.

2. An arrangement according to Claim 1, **characterised in that** the guide (2) is twisted in a continuous helical shape.

3. An arrangement according to Claim 1 and/or 2, **characterised in that** the guide is constructed as a guide channel (2).

4. An arrangement according to one or more of the preceding claims, **characterised in that** the guide (2) releases the cigarettes (1) when they are received in their upper regions (la) by the transfer device (4).

5. An arrangement according to one or more of the preceding claims, **characterised in that** the transfer device (4) is provided with receiving means (6) for receiving the cigarettes from the guide (2) from above, and **in that** the receiving means convey the cigarettes continuously to the removal device (4) [sic] on a path which is preferably constructed as part of an ellipse, the large transverse axes (18) of the cigarettes still being oriented upwards.

6. An arrangement according to Claim 5, **characterised in that** the removal device (11) has rotating receiving means (16) for the cigarettes (1) supplied by the transfer device (4), in which the cigarettes are aligned with their small transverse axes (17) parallel to the axis of rotation (14).

7. An arrangement according to one or more of the preceding claims, **characterised in that** the guide (2) may be twisted in both directions.

## Revendications

1. Dispositif pour transférer des cigarettes ovales ayant une longueur d'utilisation simple ou multiple depuis une voie de transport axiale à une voie de transport s'étendant suivant un axe transversal, comportant un guide servant à amener dans la direction de leurs axes longitudinaux, des cigarettes, dont les petits axes transversaux sont orientés vers le haut, un dispositif de transfert pour transférer les cigarettes depuis le guide à partir du haut et pour transférer les cigarettes dans la direction de déplacement transversale par rapport à leurs axes longitudinaux, et un dispositif de prélèvement pour retirer les cigarettes du dispositif de transfert et pour réaliser la poursuite du transport dans la direction de déplacement transversale par rapport à leurs axes longitudinaux, **caractérisé en ce que** le guide (2) est torsadé avec une configuration hélicoïdale de telle sorte que les cigarettes (1) sont orientées de telle sorte que leurs grands axes transversaux (18) sont dirigés vers le haut et que les cigarettes peuvent être transférées par le dispositif de transfert (4) dans leur direction d'entraînement avec leurs grands axes transversaux dirigés vers le haut.

2. Dispositif selon la revendication 1, **caractérisé en ce que** le guide (2) est torsadé continûment avec une forme hélicoïdale.

3. Dispositif selon la revendication 1 et/ou 2, **caractérisé en ce que** le guide est agencé sous la forme d'une rainure de guidage (2).

4. Dispositif selon une ou plusieurs des revendications précédentes, **caractérisé en ce que** le guide (2) libère les cigarettes (1) dans leurs parties supérieures (la), lors du transfert exécuté au moyen du dispositif de transfert (4).

5. Dispositif selon une ou plusieurs des revendications précédentes, **caractérisé en ce que** le dispositif de transfert (4) comporte des évidements (6) servant à réaliser le transfert des cigarettes par le guide (2) à partir du haut et que les logements entraînent les cigarettes continûment sur une voie agencée de préférence sous la forme d'une partie d'une ellipse en direction du dispositif de prélèvement (4), les grands axes transversaux (18) des cigarettes restant dirigés vers le haut.

6. Dispositif selon la revendication 5, **caractérisé en ce que** le dispositif de prélèvement (11) comporte pour les cigarettes (1) qui sont délivrées par le dispositif de transfert (4), des logements périphériques (16) dans lesquels les cigarettes sont orientées de telle sorte que leurs petits axes transversaux (17) sont perpendiculaires à l'axe de rotation (14).

7. Dispositif selon une ou plusieurs des revendications précédentes, **caractérisé en ce que** le guide (2) peut tourner dans les deux sens.
